# EUROPEAN PATENT APPLICATION

(11) **EP 2 062 480 A1**
(43) Date of publication of application: **27.05.2009**
(21) Application number: 07121242.7
(22) Date of filing: 21.11.2007
(51) Int. Cl.: A23G 3/00, A23G 3/20, A23L 1/00, A23P 1/12, A23G 3/54

(54) **Co-extrusion die assembly, method of producing a co-extruded food product and co-extruded food product**

(71) Applicant: Nestec S.A., 1800 Vevey (CH)
(72) Inventor: Dupart, Pierre Jean, 1010 Lausanne (CH); Sirohi, Dhan Pal, 1009 Pully (CH); Vardi, Ishay, 79280 Shtulim (IL); Tslaf, Alex, 89070 Arad (IL); Piguet, Hugo, 1116 Cottens (CH); Kaelin, Stefan, 1483 Vesin (CH)
(74) Representative: Ravenel, Thierry Gérard Louis

(57) **Abstract**

A co-extrusion die assembly for extruding a tubular body of food material around a filling material, comprises a first passage (10) for food material, said first passage (10) having an inlet end (14) for receiving food material from a first extruder (2) and at least one outlet opening (15) at the other end thereof from which the food material is extruded as a tubular body, a second passage (28) for the filling material, said second passage (28) extending through at least the outlet end portion (17) of the first passage (10), and the second passage (28) being provided in at least one inner tube (20) and having at least one outlet opening (33) positioned in the region of the outlet opening (15) of the first passage (10), wherein the first passage (10) is straight and the inner tube (20) is curved and passes through a wall (12) surrounding the first passage (10).

## Description

The present invention is directed to a co-extrusion die assembly for extruding a tubular body of food material around a filling material according to the preamble of claim 1. The invention is further directed to a method of producing a co-extruded food product and to co-extruded food products.

### Prior art

EP 1 114 587 B1 discloses a co-extrusion die assembly according to the preamble of claim 1. In this known embodiment the inner tube extends in an end portion coaxially to the first passage. The end portion of the inner tube remote from the outlet opening thereof is bent in a 90° angle upwards and passes upwardly through the wall surrounding the first passage.

If the filling material extruded through the inner tube contains particles like nut particles or almond particles or fruit seeds theses particles tend to agglomerate in the 90° bend of the inner tube. Such an agglomeration of particles will thus obstruct the flow of the filling material so that the inner tube needs to be cleaned. For cleaning this known co-extrusion die assembly the whole die needs to be dismantled which leads to a considerable downtime of the production process so that the production costs are considerably increased when the flow of the filling material in the inner tube is interrupted and the production of the extruded food product is discontinued.

GB 2 162 788 A discloses a co-extrusion die assembly in which the inner tube is passing straight through the die assembly and in which the first passage is bent in an oblique angle wherein the extruder is mounted to a lateral surface of the die assembly.

In this embodiment the problem of clogging of particles in the inner tube is substantially overcome. However, due to the bent first passage for the outer food material the surface of the outer food material after leaving the die assembly is not homogenous, causing markings to appear on that surface of the outer food material which is directed to the center of curvature of the bend.

It is therefore a first object of the present invention to achieve to a co-extrusion die assembly according to the preamble of claim 1 in which the risk of clogging of the inner tube is reduced and which avoids the appearance of markings on the surface of the extruded product.

It is a second object of the present invention to provide a method of producing a co-extruded food product.

It is a third object of the present invention to provide co-extruded food products having improved crispiness in comparison with other known co-extruded food products.

### Disclosure of the invention

The first object is achieved by the co-extrusion die assembly with the features of claim 1.

The feature that the first passage of the die assembly is straight prevents the appearance of markings on the outer surface of the extruded product. The feature that the inner tube is curved and passes through a wall surrounding the first passage reduces the risk of clogging of particles within the inner tube, and if such clogging arises, this design allows cleaning of the inner tube without dismantling the die. Thus, the possible downtime of the production process is minimized.

### Preferred embodiments of the invention

In a preferred embodiment of the die assembly according to the present invention the portion of the inner tube passing through the inner circumference of the wall is inclined with respect to the central axis of the straight first passage in an angle of less than 90°. Preferably this angle is less than 60° and more preferably the angle is less than 45°. All these alternative features lead to an inner tube which is curved with a large radius of curvature and comprises a moderate inclination from the center of the first passage to the outer circumference of the die assembly so that the risk of clogging inside the inner tube is considerably reduced.

Preferably, the inner tube is free of sharp bends which reduces also the risk of agglomeration of particles provided in the filling material.

In another preferred embodiment a flexible pipe is inserted in the inner tube and the second passage is provided inside the flexible pipe. This feature allows to quickly replace the flexible pipe if the second passage is clogged or if the filling material shall be changed.

In a preferred embodiment the pipe has an outlet opening provided in an axial direction inside or outside of the end portion of the inner tube and the other end of the pipe is connected to an extruder or a pump for the filling material. If the outlet opening of the pipe lies outside of the end portion of the inner tube the inner diameter of a tubular extruded product of the outer food material becomes smaller because this inner diameter is defined by the outer diameter of the pipe instead of the larger outer diameter of the inner tube. Therefore, a product with a smaller filling diameter and also with a smaller outer product diameter can be produced.

Preferably, the outlet openings of the first and second passages are substantially circular. Nevertheless, every other shape of the first and/or second passages may be realised.

With the preferred embodiment it is possible to produce very thin extruded products if the diameter of the outlet opening of the second passage is less than 2 mm, preferably 1 mm and if the diameter of the outlet opening of the first passage is less than 4 mm.

The second object of the present invention is achieved by the method of claim 11.

This method of producing a co-extruded food product with a die assembly preferably according to the present invention comprises the steps of delivering a first food material under pressure to a first passage of a die assembly, delivering a second food material under pressure to a second passage of the die assembly, extruding the first food material through the annular cross section of the outlet opening of the first passage around the outlet opening of the second passage to obtain a tubular mantle of the food product, and co-extruding the second food material through the outlet opening of the second passage into the inner space of the tubular mantle of the food product in order to obtain a continuous cord of a co-extruded food product.

This inventive method allows a more reliable production of co-extruded food products.

Preferably, the method comprises the further step of flattening the co-extruded food product.

It is advantageous when the step of flattening the co-extruded food product is carried out by passing the continuous cord of the co-extruded food product through a slot defined between a pair of rollers. If the circumferential surfaces of the two facing rollers each are concave the product will become an oval or quasi-oval shape in cross section.

Preferably, the method further comprises the step of cutting the co-extruded food product into pieces or slices of a predefined length.

The invention is also directed to a co-extruded food product preferably produced with the method according to the present application.

The third object of the present invention is achieved by the product as defined in claim 16 comprising an outer shell containing cereal, sugar and/or salt defining a substantially cylindrical space filled with a filling material, wherein the diameter of the cylindrical space is less than 3 mm and preferably less than 2 mm.

Preferably, the external diameter of this food product ranges from 4 mm to 60 mm.

In another preferred embodiment of a cylindrical co-extruded food product the filling material contains inclusions the largest dimensions of said inclusions being less 2.9 mm and preferably less than 1 mm. The maximum dimensions of the inclusions of 2.9 mm ensure that the inclusions fit into the inner space of the co-extruded food product. The feature that the minimum of the dimensions of said inclusions is less than 1 mm remarkably reduces the risk of blocking the inner tube.

An alternative solution to the third object of the present invention is defined in claim 19 as a flattened co-extruded food product comprising an outer shell containing cereal, sugar and/or salt defining a space having an oblong cross section having width and a thickness filled with a filling material, wherein the ratio of width to the thickness is greater than 1 and typically 4. It will be noted in that respect, that products having a width of 40 mm and a filling thickness of 2mm can easily be envisaged.

Also here it is preferable that the filling material contains inclusions the largest dimensions of said inclusions being less than 2.9 mm and preferably less than 1 mm.

The filling material is either fat based, such as chocolate, peanut paste, hazelnut paste or cheese paste or the like or the filling material is water soluble based such as fruit concentrate, honey or caramel etc.. The inclusions may be chosen from the list including in particular jelly, chocolate chips, cereal crispies, nut pieces or vegetable pieces.

### Brief description of the drawings

The present invention will now be more particularly described with reference to the accompanying drawings in which:
Fig. 1 is a longitudinally sectional view of a die assembly according to the present invention,
Fig. 2 is an enlarged view of detail II in Fig. 1 showing schematically a cutting device arranged downstream of the die assembly shown in Figure 1,
Fig. 3 is a perspective view of a cylindrical food product according to the invention; and
Fig. 4 is a perspective view of a flattened food product according to the invention.

### Detailed description of the drawings

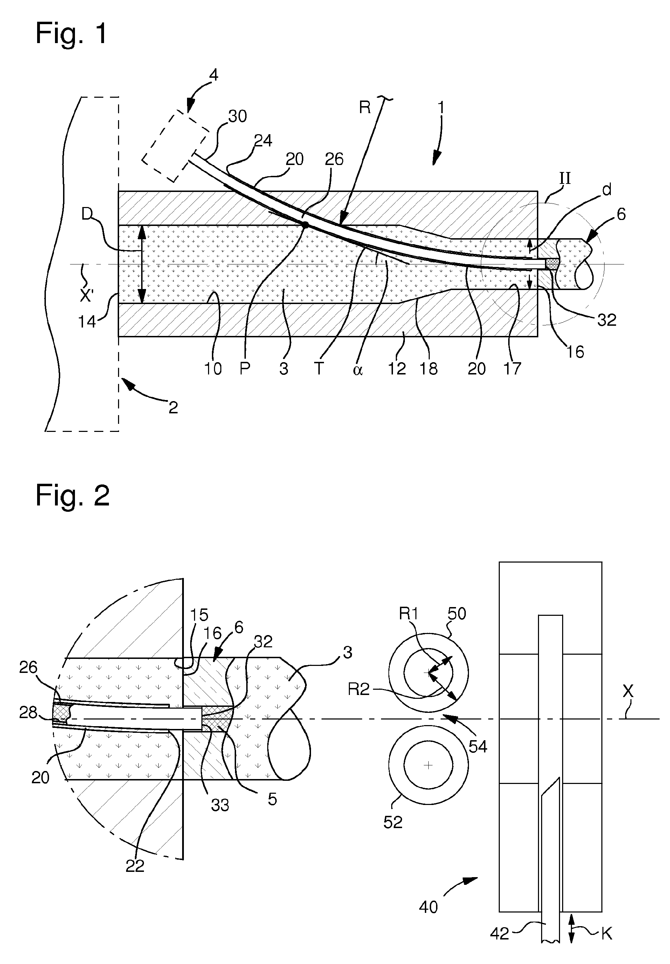

Fig. 1 shows a longitudinal section through a co-extrusion die assembly 1 of the present invention. The die assembly 1 is mounted to a schematically shown first extruder 2 for an outer food material 3. This first or outer food material is for example a dough of cereals with sugars and/or with vegetable flours. The outer food material 3 is delivered under pressure through an inlet end 14 into a tubular first passage 10 inside of the die assembly 1 wherein the passage 10 is surrounded by an outer wall 12 of the die assembly 1.

The first passage 10 extends through the die assembly 1 in a direction of a longitudinal axis X from the inlet end 14 to an outlet end 16. At the inlet end 14 of the first passage 10 which faces to the first extruder 2 the first passage 10 has a large cross-sectional diameter D. The cross-sectional diameter d of the first passage 10 at an outlet opening 15 provided at the outlet end 16 is smaller than diameter D. A tapered portion 18 of the first passage 10 reduces the cross-sectional diameter D to the smaller cross-sectional diameter d.

A curved inner tube 20 is provided with an outlet end 22 positioned co-axially in the outlet portion 17 of the first passage 10 close to the outlet end 16 thereof. The outlet end 22 of the inner tube 20 is positioned slightly inside the first passage 10 in an axial direction as can be seen in Fig. 2.

The inner tube 20 is curved with a very large radius R of curvature and leaves the inner tube 20 through the outer wall 12 of the die assembly 1. The angle α of the tangent T to the outer surface of the inner tube 20 at point P where the inner tube 20 passes through the inner circumference of the outer wall 12, with respect to the central axis X of the first passage 10 is a flat angle of about 25°.

An inlet opening 24 of the inner tube 20 is provided outside the outer wall 12 of the die assembly 1.

A flexible pipe 26 is inserted in the inner tube 20 wherein a second passage 28 (Fig. 2) is provided inside the flexible pipe 26. The flexible pipe 26 is connected with its inlet end 30 outside of the outer wall 12 to a schematically shown second extruder 4 for extruding a filling material under pressure into the flexible pipe 28.

The flexible pipe 26 passes through the inner tube 20 and an outlet end 32 of the flexible pipe 26 is provided with an outlet opening 33 and is located outside the inner tube 20 close to the outlet end 16 of the first passage and coaxially to axis X.

A second or inner food material 5 (filling material) is extruded from the second extruder 4 through the second passage 28 inside of the flexible pipe 26 at the same time as the first extruder 2 extrudes the outer food material 3. This way, a co-extruded food product 6 leaves the die assembly 1 wherein the food product 6 comprises a tubular outer portion of the first food material and an inner portion of a filling of the second food material.

In order to improve the flowability of the first and/or second food materials the wall 12 of the die assembly 1 and/or the inner tube 20 may be heated.

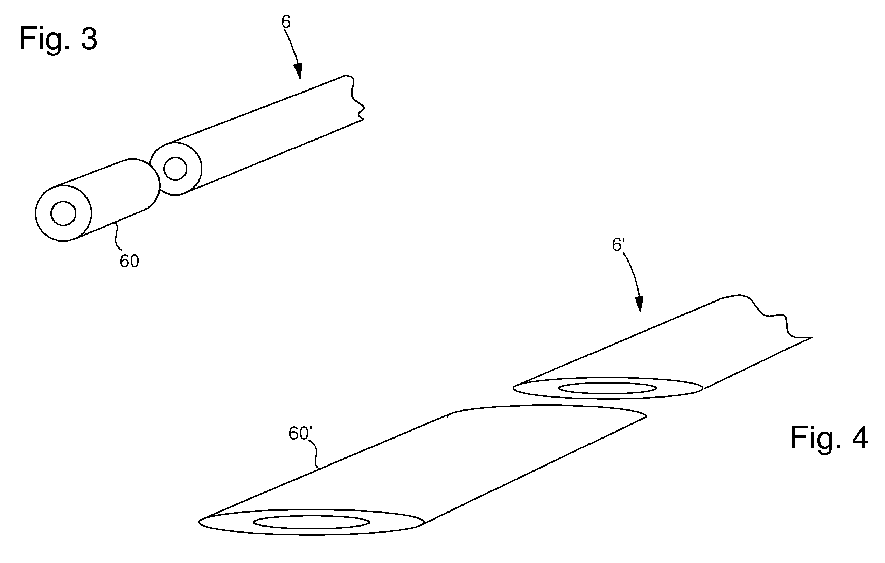

Fig. 3 shows a continuous cord of a cylindrical co-extruded food product 6 as it can be produced with the die assembly shown in Figs. 1 and 2 wherein a front end of the continuous cord of the co-extruded food product 6 has been cut off by a cutting device 40 which is provided downstream of the outlet ends 16 and 2 of the first passage 10 and of the inner tube 20, respectively (Fig. 2 without the calender rollers 50 and 52). The cut-off pieces 60 of the continuous co-extruded cylindrical food product 6 are the desired results manufactured by the method of the present invention.

Fig. 4 shows an alternative product 6' of which a piece 60' has been cut off from the front end thereof. This alternative co-extruded food product has been flattened by a pair of calender rollers 50, 52 which are positioned between the co-extrusion die assembly 1 and the cutting device 40 in a conventional manner. The two rollers 50, 52 define a slot 54 between each other through which the co-extruded food product 6 is passed downstream of the die assembly. The radius R1 of each roller in the center plane comprising axis X is smaller than the radius R2 of each roller at the left and right lateral end of each roller. Thus, the surfaces of the rollers are concave so that the slit between the rollers has an oval or quasi-oval shape.

Alternatively, the cross section of outlet opening 15 of the first passage 10 and outlet opening 33 of the inner tube 20 has a flat oval shape so that the continuous cord of the food product 6' is directly extruded. In this case the pair of rollers is not needed.

Cutting device 40 is shown in Fig. 2 schematically only and may comprise a movable knife 42 which can be movable either reciprocally as shown by arrow K or which may rotate.

The invention is not restricted to the above-described exemplary embodiment, which only serves for a general explanation of the core concept of the invention. Rather more, it is within the scope of protection that the co-extrusion die assembly in accordance with the invention could also adopt different forms than those of the embodiments described above. In particular thereby, the device may comprise features which represent a combination of the respective individual features of the claims.

The reference symbols in the claims, the description and the drawings serve only to provide a better understanding of the invention and are not intended to limit the scope of protection.

## Claims

1. A co-extrusion die assembly for extruding a tubular body of food material around a filling material, the die assembly comprising:
- a first passage (10) for food material, said first passage (10) having an inlet end (14) for receiving food material from a first extruder (2) and at least one outlet opening (15) at the other end thereof from which the food material is extruded as a tubular body,
- a second passage (28) for the filling material, said second passage (28) extending through at least the outlet end portion (17) of the first passage (10), and
- the second passage (28) being provided in at least one inner tube (20) and having at least one outlet opening (33) positioned in the region of the outlet opening (15) of the first passage (10),
wherein
- the first passage (10) is straight and
- the inner tube (20) is curved and passes through a wall (12) surrounding the first passage (10).

2. A co-extrusion die assembly according to claim 1, wherein the portion of the inner tube (20) passing through the inner circumference of the wall (12) is inclined with respect to the central axis (X) of the straight first passage (10) in an angle (α) of less than 90°, preferably less than 60° and more preferably less than 45°.

3. A co-extrusion die assembly according to claim 1 or 2, wherein the inner tube (20) is free of sharp bends.

4. A co-extrusion die assembly according to the preceding claims, wherein a flexible pipe (26) is inserted in the inner tube (20) and the second passage (28) is provided inside the flexible pipe (26).

5. A co-extrusion die assembly according to claim 4, wherein the pipe (26) has an outlet opening (33) provided in an axial direction inside or outside of the end portion of the inner tube (20) and the other end of the pipe (26) is connected to a second extruder (4) for the filling material.

6. A co-extrusion die assembly according to the preceding claims, wherein the outlet openings (15, 33) of the first and second passages (10, 28) are substantially circular.

7. A co-extrusion die assembly according to claim 6, wherein the diameter of the outlet opening (33) of the second passage (28) is less than 2 mm, preferably 1 mm.

8. A co-extrusion die assembly according to claim 7, wherein the diameter of the outlet opening (15) of the first passage (10) is less than 4 mm.

9. A co-extrusion die assembly according to one of claims 1 to 5, wherein the outlet openings of the first and second passages are substantially oval.

10. A co-extrusion die assembly according to claim 9, wherein the main axes of the outlet opening (15) of the first passage (10) are the same as the main axes of the outlet opening (33) of the second passage (28).

11. A method of producing a co-extruded food product with a die assembly, preferably according to one of claims 1 to 10 comprising the steps of
- delivering a first food material under pressure to a first passage of a die assembly,
- delivering a second food material under pressure to a second passage of the die assembly,
- extruding the first food material through an annular cross section of the outlet opening of the first passage around the outlet opening of the second passage to obtain a tubular mantle of the food product, and
- co-extruding the second food material through the outlet opening of the second passage into the inner space of the tubular mantle of the food product in order to obtain a continuous cord of a co-extruded food product.

12. A method according to claim 11, comprising the further step of flattening the co-extruded food product.

13. A method according to claim 12, wherein the step of flattening the co-extruded food product is carried out by passing the continuous cord of the co-extruded food product through a slot defined between a pair of rollers.

14. A method according to claim 11, 12 or 13, comprising the further step of cutting the co-extruded food product into pieces or slices of a predefined length.

15. A co-extruded food product produced with the method of one of claims 11 to 14.

16. A cylindrical co-extruded food product preferably produced with the method of claim 11, comprising an outer shell containing cereal, sugar and/or salt defining a substantially cylindrical space filled with a filling material, wherein the diameter of the cylindrical space is less than 3 mm and preferable less than 2 mm.

17. A cylindrical co-extruded food product according to claim 16, wherein the external diameter ranges from 4 mm to 60 mm.

18. A cylindrical co-extruded food product according to one of claims 15 to 17, wherein the filling material contains inclusions the largest dimensions of said inclusions being less than 2.9 mm and preferably less than 1 mm.

19. A flattened co-extruded food product preferably produced with the method of one of claims 11 to 13, comprising an outer shell containing cereal, sugar and/or salt defining a space having an oblong cross section having width and a thickness filled with a filling material, wherein the ratio of width to the thickness greater than 1 and typically 4.

20. A cylindrical co-extruded food product according to claim 19, wherein the filling material contains inclusions the largest dimensions of said inclusions being less than 2.9 mm and preferably less than 1 mm.
